# EUROPEAN PATENT APPLICATION

(11) **EP 4 258 641 A1**
(43) Date of publication of application: **11.10.2023**
(21) Application number: 21902211.8
(22) Date of filing: 18.10.2021
(51) Int. Cl.: H04N 5/225, H04N 5/232

(54) **IMAGE PROCESSING METHOD, IMAGE PROCESSOR, AND ELECTRONIC DEVICE**

(30) Priority: 09.12.2020 CN 202011448728
(71) Applicant: GUANGDONG OPPO MOBILE TELECOMMUNICATIONS CORP., LTD., Dongguan, Guangdong 523860 (CN)
(72) Inventor: LIU, Jun, Dongguan, Guangdong 523860 (CN)
(74) Representative: Penza, Giancarlo
(86) International application number: PCT/CN2021/124422
(87) International publication number: WO 2022/121504

(57) **Abstract**

Provided are an image processing method, an image processor, and an electronic device. The method comprises: acquiring a first image; processing first image data of the first image by means of a first processing channel of an image processor, and processing second image data of the first image by means of a second processing channel of the image processor; acquiring a second image; processing the first image data and the second image data by means of the first processing channel, and releasing the second processing channel; and processing image data of the second image by means of the second processing channel.

## Description

The present disclosure claims priority to Chinese patent application No. 202011448728.2, filed to China National Intellectual Property Administration (CNIPA) on December 9, 2020, entitled "IMAGE PROCESSING METHOD, IMAGE PROCESSOR, AND ELECTRONIC DEVICE", the entire content of the above-mentioned disclosure is hereby incorporated herein by reference.

### TECHNICAL FIELD

The present disclosure relates to the field of image processing technologies, and more particular, to an image processing method, an image processor, and an electronic device.

### BACKGROUND

At present, an electronic device such as a smart phone or a tablet computer is usually equipped with multiple cameras, and characteristics of the multiple cameras are utilized for shooting in order to achieve the best shooting effect. For example, a user can switch to any one camera from the multiple cameras for shooting according to actual requirements. In order to improve the quality of images shot by the cameras, the electronic device is usually equipped with an image processor for processing the images shot by the cameras. The image processor usually performs specified processing, such as white balance and noise reduction, on the images through a processing channel in the image processor according to a specific processing flow.

### SUMMARY

Embodiments of the present disclosure provide an image processing method, an image processor, and an electronic device, which can improve the image processing capability of the image processor.

An embodiment of the present disclosure provides an image processing method, which is applied to an image processor and includes:
acquiring a first image, where the first image includes first image data and second image data;
processing the first image data by means of a first processing channel of the image processor, and processing the second image data by means of a second processing channel of the image processor;
acquiring a second image;
processing the first image data and the second image data by means of the first processing channel, and releasing the second processing channel; and
processing image data of the second image by means of the second processing channel.

Another embodiment of the present disclosure provides an image processor, which includes:
a first input interface, configured to acquire a first image, where the first image includes first image data and second image data; and
a second input interface, configured to acquire image data of a second image;
where the image processor is configured to process the first image data by means of a first processing channel and processing the second image data by means of a second processing channel; and in response to the second input interface acquiring the image data of the second image, process the first image data and the second image data by means of the first processing channel, release the second channel, and process the image data of the second image by means of the second processing channel.

Still another embodiment of the present disclosure provides an image processor, which includes:
a storage unit stored with a computer program; and
a processing unit, configured to execute the computer program to implement the image processing method provided by the present disclosure.

Yet still another embodiment of present disclosure provides an electronic device, which includes:
a first camera, configured to acquire a first image, where the first image includes first image data and second image data;
a second camera, configured to acquire a second image;
the image processor provided by the present disclosure, and
a display coupled to the image processor, where the display is configured to display an image transmitted by the image processor.

### BRIEF DESCRIPTION OF THE DRAWINGS

In order to more clearly explain the technical solutions of embodiments of the present disclosure, the following will briefly introduce accompanying drawings required in the description of the embodiments.
FIG. 1 illustrates a schematic structural diagram of an image processor according to an embodiment of the present disclosure.
FIG. 2 illustrates a flowchart of an image processing method according to an embodiment of the present disclosure.
FIG. 3 illustrates a schematic view of a 2 x2 Bayer color filter array.
FIG. 4 illustrates a schematic view of a 4×4 color filter array according to an embodiment of the present disclosure.
FIG. 5 illustrates a schematic view of splitting a first image into first image data and second image data according to an embodiment of the present disclosure.
FIG. 6 illustrates a schematic view of processing of a first image according to an embodiment of the present disclosure.
FIG. 7 illustrates another schematic view of processing of the first image according to an embodiment of the present disclosure.
FIG. 8 illustrates a schematic view of processing of a first image and a second image simultaneously according to an embodiment of the present disclosure.
FIG. 9 illustrates a schematic view of a detailed structure of an image signal processing unit in an image processor.
FIG. 10 illustrates a schematic view of converting first image data and second image data into third image data according to an embodiment of the present disclosure.
FIG. 11 illustrates a schematic view of processing of a second image according to an embodiment of the present disclosure.
FIG. 12 illustrates a schematic view of processing and then displaying a first image according to an embodiment of the present disclosure.

### DETAILED DESCRIPTION OF EMBODIMENTS

The technical solutions provided by embodiments of the present disclosure can be applied to various scenarios requiring data communication, and the embodiments of the present disclosure are not limited thereto.

An embodiment of the present disclosure provides an image processor, which includes: a first input interface, configured to acquire a first image, where the first image includes first image data and second image data; and a second input interface, configured to acquire image data of a second image; where the image processor is configured to process the first image data by means of a first processing channel and processing the second image data by means of a second processing channel; and in response to the second input interface acquiring the image data of the second image, process the first image data and the second image data by means of the first processing channel, release the second channel, and process the image data of the second image by means of the second processing channel.

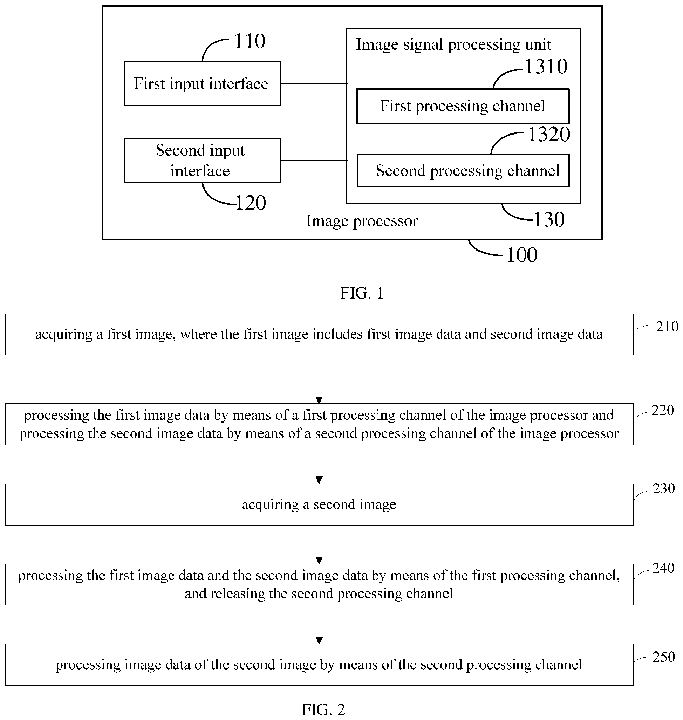

As illustrated in FIG. 1, FIG. 1 illustrates a schematic structural diagram of an image processor 100 provided by an embodiment of the present disclosure. The image processor 100 may include a first input interface 110, a second input interface 120, and an image signal processing unit 130 including a first processing channel 1310 and a second processing channel 1320.

In an embodiment, the first input interface 110 is configured to acquire a first image, where the first image includes first image data and second image data; the second input interface 120 is configured to acquire image data of a second image; and the image processor 100 is configured to process the first image data by means of the first processing channel 1310 and process the second image data by means of the second processing channel 1320; and in response to the second input interface 120 acquiring the image data of the second image, process the first image data and the second image data by means of the first processing channel 1310, release the second channel, and process the image data of the second image by means of the second processing channel 1320.

It should be noted that the first input interface 110, the second input interface 120, and the image signal processing unit 130 are achieved through a process of hardware configuration such as circuit arrangement and programming, so that the stability of the first input interface 110, the second input interface 120, and the image signal processing unit 130 in an operating process can be ensured, and the power consumption and processing time of the first input interface 110, the second input interface 120, and the image signal processing unit 130 when processing data can be reduced.

The image processor 100 provided by the embodiments of the present disclosure can be equipped in an electronic device equipped with an application processor and multiple cameras and configured to process images shot by the multiple cameras. The electronic device can be a mobile electronic device such as a smart phone, a tablet computer, a palmtop computer, or a notebook computer, or a fixed electronic device such as a desktop computer or a television. Types of the multiple cameras of the electronic device are not limited in the present disclosure, and can be configured by ordinary technicians in the field according to actual requirements. In an embodiment of the present disclosure, when a focal length is used as a classification standard of the types of the cameras, the electronic device can be equipped with three cameras, namely, a wide-angle camera, an ultra-wide-angle camera, and a telephoto camera.

An embodiment of the present disclosure provides an image processing method, which is applied to an image processor and includes: acquiring a first image, where the first image includes first image data and second image data; processing the first image data by means of a first processing channel of the image processor and processing the second image data by means of a second processing channel of the image processor; acquiring a second image; processing the first image data and the second image data by means of the first processing channel, and releasing the second processing channel; and processing image data of the second image by means of the second processing channel.

In an illustrated embodiment, the processing the first image data and the second image data by means of the first processing channel includes: in response to detecting a frame start signal corresponding to the first image, processing the first image data and the second image data by means of the first processing channel.

In an illustrated embodiment, the processing the first image data and the second image data by means of the first processing channel includes: converting the first image data and the second image data into third image data with an image format capable of being processed by the first processing channel; and processing the third image data by means of the first processing channel.

In an illustrated embodiment, the second image includes fourth image data and fifth image data, and the image processing method further includes: releasing the first processing channel; processing the fourth image data by means of the first processing channel, and processing the fifth image data by means of the second processing channel.

In an illustrated embodiment, the releasing the first processing channel includes: in response to detecting a frame start signal corresponding to the second image, releasing the first processing channel.

In an illustrated embodiment, before the processing image data of the second image by means of the second processing channel, the image processing method further includes: displaying processed image data of the first image.

In an illustrated embodiment, after the processing image data of the second image by means of the second processing channel, the image processing method further includes: switching to display processed image data of the second image.

In an illustrated embodiment, the second image includes fourth image data and fifth image data, and the processing image data of the second image by means of the second processing channel includes: processing the fourth image data and the fifth image data by means of the second processing channel.

In an illustrated embodiment, the processing the fourth image data and the fifth image data by means of the second processing channel includes: converting the fourth image data and the fifth image data into sixth image data with an image format capable of being processed by the second processing channel; and processing the sixth image data by means of the second processing channel.

Based on the image processor 100 illustrated in FIG. 1, an embodiment of the present disclosure provides an image processing method applied to the image processor 100. As illustrated in FIG. 2, the image processing method may include blocks 210 to 250.

At block 210, a first image is acquired, where the first image includes first image data and second image data.

It should be noted that the following description will take application of the image processor 100 being equipped in the above-mentioned electronic device to a multi-camera switching scene as an example.

Generally, a camera is composed of various parts, and the various parts include a lens, a motor, and an image sensor. Specifically, the lens is configured to project an external light signal to the image sensor; and the image sensor is a component which can convert the light signal into an electrical signal, the image sensor has photosensitive units, each of the photosensitive units is called a pixel, and a value of the pixel represents an intensity of sensed light, but cannot represent a color. In order to represent the color, a color filter array is usually arranged in front of the image sensor, and each color filter unit of the color filter array corresponds to one pixel and is configured to allow only light of a single color to pass through and be sensed by the image sensor. For example, a red filter unit only allows red light to pass through it, a green filter unit only allows green light to pass through it, and the blue filter unit only allows blue light to pass through it.

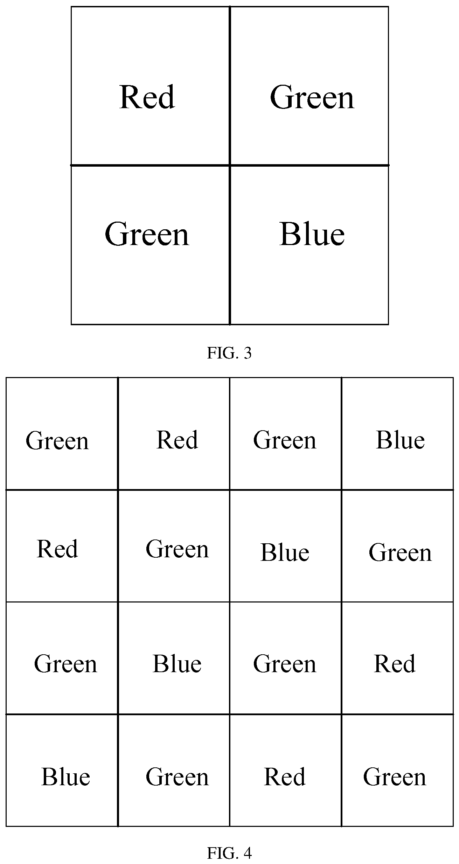

A Bayer color filter array is a color filter array widely used in the electronic device such as a smart phone or a digital camera. As illustrated in FIG. 3, each 2×2 array unit includes two green filter units, one red filter unit, and one blue filter unit.

Different from the traditional Bayer array, an embodiment of the present disclosure provides a novel color filter array. As illustrated in FIG. 4, a 4×4 array unit of the novel color filter array includes 8 green filter units, 4 red filter units, and 4 blue filter units.

In embodiments of the present disclosure, a camera configured for shooting in the electronic device at a current moment is designated as a first camera, which can be any one of the multiple cameras equipped in the electronic device. The following description takes the novel color filter array according to the present disclosure equipped in the first camera as an example. In addition, in the embodiments of the present disclosure, an image shot by the first camera in real time is designated as the first image. It can be understood that the first image does not refer to a specific image, but refers to the image shot by the first camera in real time, that is, as long as the first camera is started, the first image is continuously shoot.

Accordingly, the image processor 110 can acquire the first image shot by the first camera from the first camera through the first input interface 110.

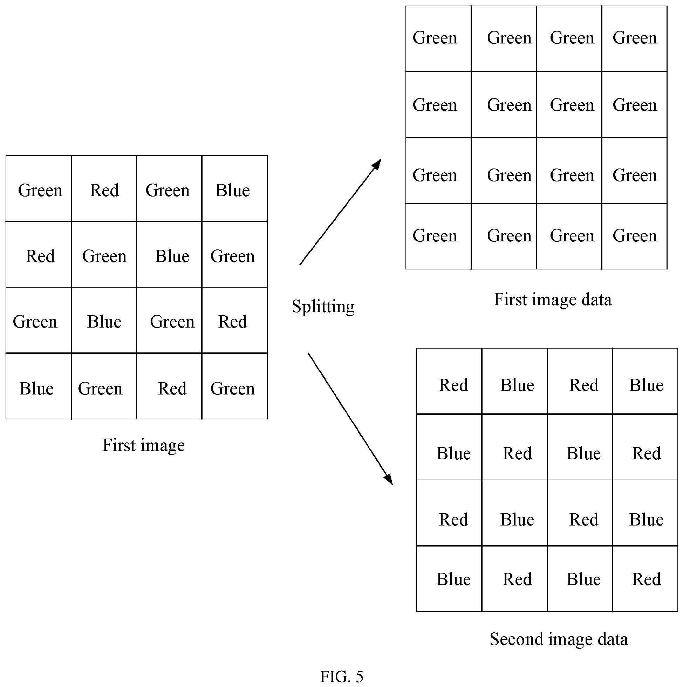

As illustrated in FIG. 5 (only one 4×4 array unit is illustrated), the first image can be split into two parts of image data, namely, the first image data and the second image data. As illustrated in FIG. 5, the first input interface 110 splits the first image into the first image data and the second image data. The first image data is composed of a green component, and the second image data is composed of red and blue mixed components. Sizes of the first image data, the second image data, and the first image are the same, that is, the green component of the first image data is full-sized, and the red component and the blue component of the second image data are both half-sized.

At block 220, the first image data is processed by means of the first processing channel 1310 of the image processor 100, and the second image data is processed by means of the second processing channel 1320 of the image processor 100.

As described above, the image signal processing unit 130 includes two processing channels, and the processing channels are configured to perform specified processing on images input therein. The processing channels can be configured to perform conventional image processing (including but not limited to bad point correction processing, time domain noise reduction processing, 3D noise reduction processing, linearization processing, and black level correction processing, etc.) and neural network processing (including night scene optimization processing, high dynamic processing, blurring processing and super-resolution processing based on neural network) on the images. In the embodiments of the present disclosure, one of the two processing channels is designated as the first processing channel 1310, and the other of the two processing channels is designated as the second processing channel 1320.

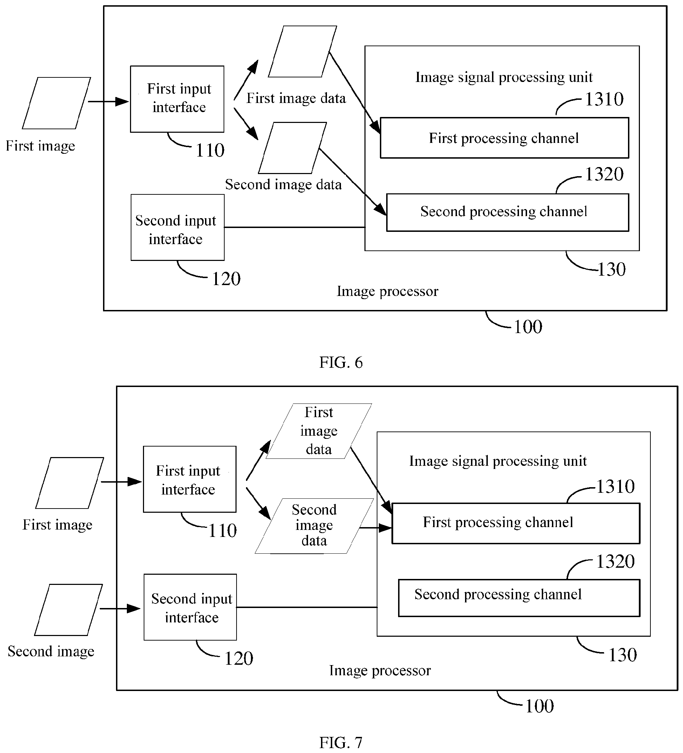

It can be understood that since the image signal processing unit 130 includes the first processing channel 1310 and the second processing channel 1320, the first input interface 110 can allocate both the first image data and the second image data to one of the two processing channels for processing; or can allocate the first image data to one of the two processing channels for processing, and allocate the second image data to the other of the two processing channels for processing. In order to make full use of the two processing channels of the image signal processing unit 130, in the embodiment of the present disclosure, after the first image is acquired by the image processor 100 through the first input interface 110, the first image is further split into the first image data and the second image data through the first input interface 110, and the first image data is distributed to the first processing channel 1310 for processing, and the second image data is distributed to the second processing channel 1320 for processing, as illustrated in FIG. 6.

At block 230, a second image is acquired.

As described above, the electronic device is equipped with the multiple cameras, and a user can switch from the camera used by the electronic device to another camera for shooting according to actual requirements. When the first camera is the wide-angle camera, the electronic device can switch to the ultra-wide-angle camera or the telephoto camera according to control of the user.

When the electronic device triggers the switching from the first camera to a second camera, the image processor 100 controls and starts the second camera. After the second camera is started, the second camera, similar to the first camera, will also shot in real time. For distinguishing, an image shot by the second camera in real time is designated as a second image. It should be noted that the second camera can be any camera equipped in the electronic device except the first camera.

After the second camera is started, the image processor 100 will acquire the second image shot by the second camera in real time from the second camera through the second input interface 120.

At block 240, the first image data and the second image data are processed by means of the first processing channel 1310, and the second processing channel 1320 is released.

The image processor 100 distributes the first image data and the second image data split from the first image through the first input interface 110 to the first processing channel 1310 for processing, so that the second processing channel 1320 can be released, as illustrated in FIG. 7. In this case, the image processor 100 releases the second processing channel 1320.

At block 250, the image data of the second image is processed by means of the second processing channel 1320.

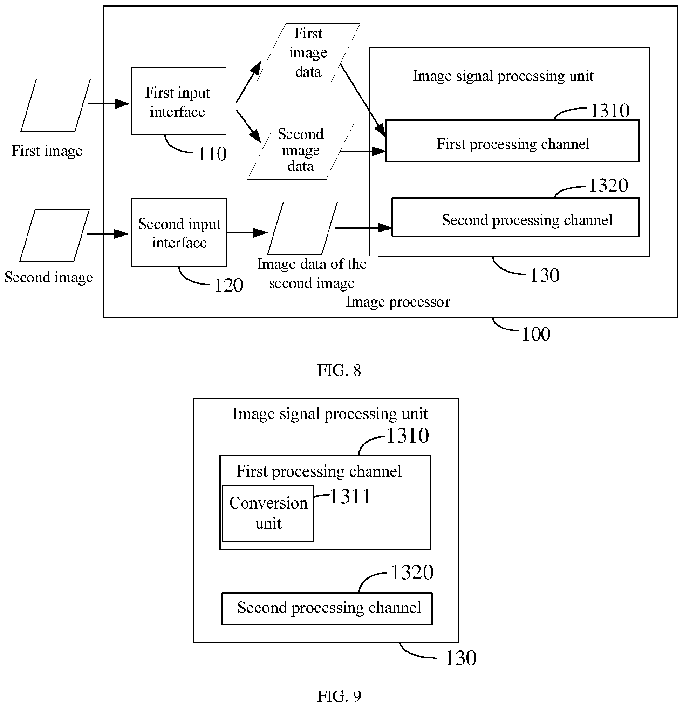

It can be understood that since the second processing channel 1320 is released at this time, the image processor 110 can assign the image data of the acquired second image to the second processing channel 1320 for specified processing through the second input interface 120, as illustrated in FIG. 8.

It should be noted that the image processor 100 provided by the present disclosure could not only process the image acquired by the color filter array illustrated in FIG. 3, but also be suitable for other similar color filter arrays that need to split the image into two parts of image data and process them separately.

From the above, in the present disclosure, the first image is acquired, and the first image includes the first image data and the second image data; the first image data is processed by means of the first processing channel 1310 of the image processor, and the second image data is processed by means of the second processing channel 1320 of the image processor; the second image is acquired; the first image data and the second image data are processed by means of the first processing channel 1310 and the second processing channel 1320 is released; and the image data of the second image is processed by means of the second processing channel 1320. In this way, the image processor can process different images at the same time, which improves the image processing ability of the image processor. When the image processor is applied to an electronic device including multiple cameras, the image processor can simultaneously process images from different cameras in the above manner, and even in a process of switching cameras, it can be ensured that there is a processed image for displaying, and seamless switching of cameras can be achieved.

In an illustrated embodiment, a step of processing the first image data and the second image data by means of the first processing channel 1310 includes: in response to detecting a frame start signal corresponding to the first image, processing the first image data and the second image data by means of the first processing channel 1310.

It should be noted that when the first camera transmits the first image to the first input interface 110 every time, it may transmit a frame start signal used for indicating start of transmission of a new frame of the first image, and then transmit the image data of the first image to the first input interface 110.

After receiving the frame start signal from the first camera through the first input interface 110, the image processor 100 determines that the data to be received by the first input interface 110 is the image data of the first image. Based on this, in order to improve the continuity of image processing, when the image processor 100 detects the frame start signal corresponding to the first image, it processes the first image data and the second image data of the received first image through the first processing channel 1310.

In an illustrated embodiment, a step of processing the first image data and the second image data through the first processing channel 1310 includes: converting the first image data and the second image data into third image data with an image format capable of being processed by the first processing channel 1310; and processing the third image data by means of the first processing channel 1310.

In the embodiments of the present disclosure, in order to improve the efficiency of image processing, the first image data and the second image data are packaged into image data for processing, specifically, the image processor 100 converts the first image data and the second image data into third image data with an image format capable of being processed by the first processing channel 1310, and then processes the third image data by means of the first processing channel 1310.

As illustrated in FIG. 9, the first processing channel 1310 includes a conversion unit 1311 configured to convert the first image data and the second image data into image data with an image format capable of being processed by the first processing channel 1310. Accordingly, the image processor 100 converts the first image data and the second image data into the image data with the image format capable of being processed by the first processing channel 1310 through the conversion unit 1311, and the image data is designated as third image data, and then the image processor 100 processes the third image data obtained by converting by means of the first processing channel 1310.

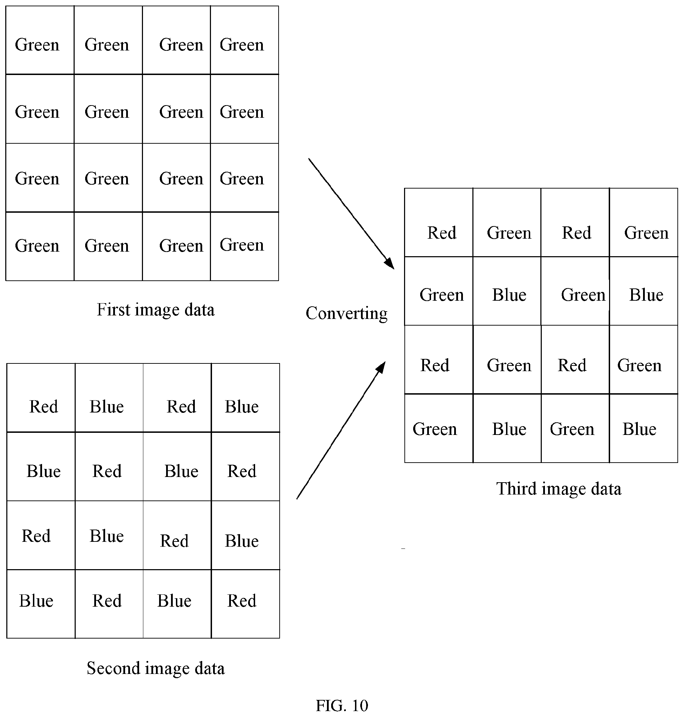

As illustrated in FIG. 10, for the first image data and the second image data illustrated in FIG. 5, the image processor 100 converts the first image data and the second image data into the third image data with a Bayer format through the conversion unit 1311, and the third image data with a Bayer format can be processed by means of the first processing channel 1310.

In other embodiments, the image processor 100 may sequentially process the first image data and the second image data by means of the first processing channel 1310.

In an illustrated embodiment, the second image includes fourth image data and fifth image data, a step of processing the image data of the second image by means of the second processing channel 1320 includes: processing the fourth image data and the fifth image data by means of the second processing channel 1320.

It should be noted that in the embodiments of the present disclosure, the second image can also be split into two parts of image data for processing, one part of which is designated as the fourth image data and the other part is designated as the fifth image data. In the embodiments of the present disclosure, the second camera also adopts the novel color filter array provided by the present disclosure, similar to the first camera. In this case, similarly, the second image shot by the second camera can be split into image data composed of a green component (i.e., the fourth image data) and image data composed of red and blue mixed components (i.e., the fifth image data).

As described above, since the first camera still occupies the first processing channel 1310, that is, in this case, the image processor 100 can only process the second image from the second camera by means of the released second processing channel.

In an illustrated embodiment, the image processor 100 may sequentially process the fourth image data and the fifth image data by means of the second processing channel 1320.

In another illustrated embodiment, the image processor 100 may convert the fourth image data and the fifth image data into sixth image data with an image format capable of being processed by means of the second processing channel, and process the sixth image data by means of the second processing channel.

In an illustrated embodiment, the image processing method provided by the present disclosure further includes: releasing the first processing channel 1310; and processing the fourth image data by means of the first processing channel 1310, and processing the fifth image data by means of the second processing channel 1320.

In the embodiments of the present disclosure, in order to process the second image more efficiently, the image processor 100 processes the second image by means of two processing channels.

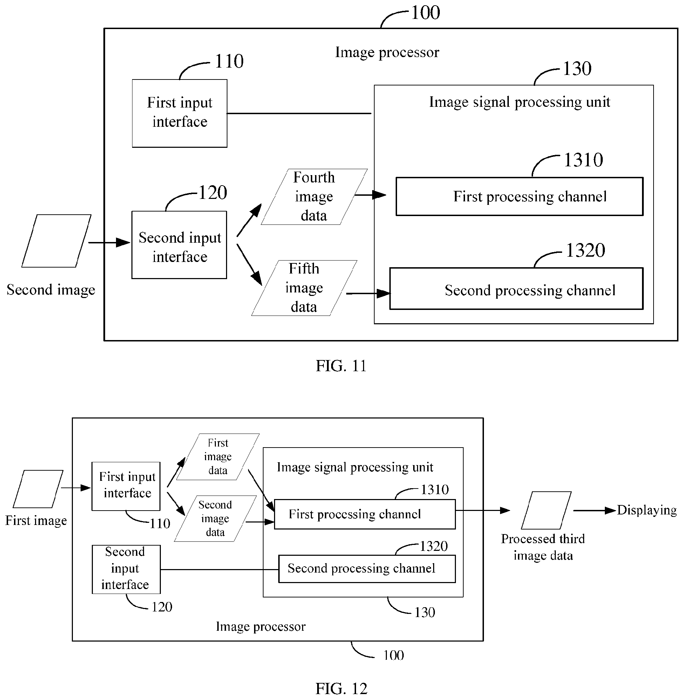

Specifically, the image processor 100 releases the first processing channel 1310, processes the fourth image data by means of the first processing channel 1310, and processes the fifth image data by means of the second processing channel 1320, as illustrated in FIG. 11.

It can be understood that since the first image shot by the first camera is not processed in this case, the image processor 100 can turn off the first camera to save power consumption.

In an illustrated embodiment, the releasing the first processing channel 1310 includes: in response to detecting a frame start signal corresponding to the second image, releasing the first processing channel 1310.

It should be noted that when the second camera transmits the second image to the second input interface 110 every time, it may transmit a frame start signal used for indicating start of transmission of a new frame of the second image to the second input interface 110, and then transmit the image data of the second image to the second input interface 110.

After receiving the frame start signal from the second camera through the second input interface 110, the image processor 100 determines that the data to be received by the second input interface 120 is the image data of the second image. Based on this, in order to improve the continuity of image processing, when the image processor 100 detects the frame start signal corresponding to the second image, the image processor 100 releases the first processing channel 1310, process the fourth image data by means of the first processing channel 1310, and process the fifth image data by means of the second processing channel 1320.

In an illustrated embodiment, before the processing image data of the second image by means of the second processing channel 1320, the image processing method further includes: displaying processed image data of the first image.

Specifically, before the processing image data of the second image by means of the second processing channel 1320, the image processor 100 displays the processed image data of the first image, after the processing of the first image is finished. As illustrated in FIG. 12, the image processor 100 converts the first image data and the second image data into the third image data with the Bayer format for processing, and correspondingly obtains the processed third image data. The image processor 100 then provides the processed third image data to the application processor of an electronic device, and the application processor displays the third image data. The application processor may directly display the third image data, or perform other image processing not performed by the image processor 100 before displaying and then display the processed third image data.

In an illustrated embodiment, after the processing image data of the second image by means of the second processing channel 1320, the image processing method further includes: switching to display processed image data of the second image.

After the image data of the second image is processed by means of the second processing channel 1320, the image processor 100 no longer displays the processed image data of the first image, but switches to display the processed image data of the second image.

It can be understood that in the multi-camera switching scene provided above, the present disclosure can ensure that images can be displayed continuously during a switching process, and seamless switching of cameras can be realized.

In order to more clearly explain the image processing method provided by the present disclosure, the following description will take the application of the image processing method in the multiple-camera switching scene as an example. The flowchart of the image processing method provided by the present disclosure can further include operations 310 to 350.

At operation 310, a first image from a first camera is acquired by means of the first input interface 110 of the image processor 100.

The image processor 100 provided by the embodiments of the present disclosure can be equipped in an electronic device equipped with an application processor and multiple cameras and configured to process images shot by the multiple cameras. The electronic device can be a mobile electronic device such as a smart phone, a tablet computer, a palmtop computer, or a notebook computer, or a fixed electronic device such as a desktop computer or a television. Types of the multiple cameras of the electronic device are not limited in the present disclosure, and can be configured by ordinary technicians in the field according to actual requirements. In an embodiment of the present disclosure, when a focal length is used as a classification standard of the types of the cameras, the electronic device can be equipped with three cameras, namely, a wide-angle camera, an ultra-wide-angle camera, and a telephoto camera.

In embodiments of the present disclosure, a camera configured for preview display at a certain moment is designated as a first camera, which can be any one of the multiple cameras equipped in the electronic device.

Generally, a camera is composed of various parts, and the various parts include a lens, a motor, and an image sensor. Specifically, the lens is configured to project an external light signal to the image sensor; and the image sensor is a component which can convert the light signal into an electrical signal, the image sensor has photosensitive units, each of the photosensitive units is called a pixel, and a value of the pixel represents an intensity of sensed light, but cannot represent a color. In order to represent the color, a color filter array is usually arranged in front of the image sensor, and each color filter unit of the color filter array corresponds to one pixel and is configured to allow only light of a single color to pass through and be sensed by the image sensor. For example, a red filter unit only allows red light to pass through it, a green filter unit only allows green light to pass through it, and the blue filter unit only allows blue light to pass through it.

A Bayer color filter array is a color filter array widely used in the electronic device such as a smart phone or a digital camera. As illustrated in FIG. 3, each 2×2 array unit includes two green filter units, one red filter unit, and one blue filter unit.

Different from the traditional Bayer array, an embodiment of the present disclosure provides a novel color filter array. As illustrated in FIG. 4, each 4×4 array unit of the novel color filter array includes 8 green filter units, 4 red filter units, and 4 blue filter units.

In embodiments of the present disclosure, a camera configured for shooting in the electronic device at a current moment is designated as a first camera, which can be any one of the multiple cameras equipped in the electronic device. The following description takes the novel color filter array according to the present disclosure equipped in the first camera as an example. In addition, in the embodiments of the present disclosure, an image shot by the first camera in real time is designated as the first image. It can be understood that the first image does not refer to a specific image, but refers to the image shot by the first camera in real time, that is, as long as the first camera is started, the first image is continuously shoot.

Accordingly, the image processor 110 can acquire the first image shot by the first camera from the first camera through the first input interface 110.

As illustrated in FIG. 5 (only one 4×4 array unit is illustrated), the first image can be split into two parts of image data, namely, the first image data and the second image data. As illustrated in FIG. 5, the first input interface 110 splits the first image into the first image data and the second image data. The first image data is composed of a green component, and the second image data is composed of red and blue mixed components. Sizes of the first image data, the second image data, and the first image are the same, that is, the green component of the first image data is full-sized, and the red component and the blue component of the second image data are both half-sized.

At operation 320, the first image data of the first image is processed by means of the first processing channel of the image processor 100, the second image data of the first image is processed by means of the second processing channel of the image processor 100, and processed first image data and second image data are displayed.

As described above, the image signal processing unit 130 includes two processing channels, and the processing channels are configured to perform specified processing on images input therein. The processing channels can be configured to perform conventional image processing (including but not limited to bad point correction processing, time domain noise reduction processing, 3D noise reduction processing, linearization processing, and black level correction processing, etc.) and neural network processing (including night scene optimization processing, high dynamic processing, blurring processing and super-resolution processing based on neural network) on the images. In the embodiments of the present disclosure, one of the two processing channels is designated as the first processing channel 1310, and the other of the two processing channels is designated as the second processing channel 1320.

It can be understood that since the image signal processing unit 130 includes the first processing channel 1310 and the second processing channel 1320, the first input interface 110 can allocate both the first image data and the second image data to one of the two processing channels for processing; or can allocate the first image data to one of the two processing channels for processing, and allocate the second image data to the other of the two processing channels for processing. In order to make full use of the two processing channels of the image signal processing unit 130, in the embodiment of the present disclosure, after the first image is acquired by the image processor 100 through the first input interface 110, the first image is further split into the first image data and the second image data through the first input interface 110, and the first image data is distributed to the first processing channel 1310 for processing, and the second image data is distributed to the second processing channel 1320 for processing, as illustrated in FIG. 6.

In the embodiments of the present disclosure, the image processor 100 also displays the processed first image data and second image data after finishing processing the first image every time. In a specific embodiment, the image processor 100 fuses the processed first image data and the first image data into a Bayer format image, and provides the Bayer format image to the application processor for preview display. The application processor may directly preview and display the Bayer format image, or perform other image processing not performed by the image processor 100 before previewing and displaying, and then preview and display the processed Bayer format image.

At operation 330, when switching from the first camera to the second camera is triggered, the second camera is started, and a second image from the second camera is acquired through the second input interface of the image processor 100.

As described above, the multiple cameras included in the electronic device are respectively suitable for shooting scene with different distances. It can be understood that when a current change trend of a zoom ratio of an image (i.e., the first image) previewed and displayed from the first camera is a larger trend, it means that a user wants to shoot an object at a longer distance, and when the current change trend of the zoom ratio of the image of the first camera previewed and displayed is a smaller trend, it means that the user wants to shoot an object at a shorter distance. Based on this, a corresponding relationship between a change trend and cameras may be preset in the electronic device.

Accordingly, the image processor 100 can acquire the current change trend of the zoom ratio of the displayed first image; and determine the second camera corresponding to the current change trend according to the preset corresponding relationship between the change trend and the cameras, and trigger the switching from the first camera to the second camera.

In an illustrated embodiment, the image processor 100 may determine a camera with a focal length greater than that of the first camera as the second camera when the current change trend is a trend of continuous enlargement within a preset period.

In an illustrated embodiment, taking the preset period equaling to at least two preset time intervals as constraints, a value of the preset period can be taken by ordinary technicians in the field according to actual requirements, when the preset time interval is configured as 500 milliseconds, the preset period can be configured as 1 second. The current change trend is a change trend of the zoom ratio within the preset period.

Accordingly, when the image processor 100 determines the second camera corresponding to the current change trend according to the preset corresponding relationship between the change trend and the cameras, it obtains the change trend of the zoom ratio within the preset period. The preset time interval for sampling the change trend may be set to 500 milliseconds, and the preset period may be set to 1 second, in this case, the image processor 100 can obtain two change trends sampled in the latest 1 second from a current moment, and when both the two obtained change trends become larger, it can be determined that the current change trend is a trend of continuous enlargement within the preset period.

When it is determined that the current change trend is a trend of continuous enlargement within the preset period, the image processor 100 determines a camera with a focal length greater than that of the first camera among the multiple cameras as the second camera.

When cameras with a focal length greater than that of the first camera are not unique, that is, there are multiple cameras with a focal length greater than that of the first camera, the image processor 100 determines the camera with the smallest focal length among the multiple cameras with the focal length greater than that of the first camera as the second camera, that is, determines the camera with the closest focal length to the first camera as the second camera.

In an illustrated embodiment, when it is determined that the current change trend is a trend of continuous decreasing within the preset period, the image processor 100 determines a camera with a focal length smaller than that of the first camera as the second camera.

When cameras with a focal length smaller than that of the first camera are not unique, that is, there are multiple cameras with a focal length smaller than that of the first camera, the image processor 100 determines the camera with the largest focal length among the multiple cameras with the focal length smaller than that of the first camera as the second camera, that is, determines the camera with the closest focal length to the first camera as the second camera.

As described above, after the second camera is determined, the image processor 100 can trigger the switching from the first camera to the second camera.

When switching from the first camera to the second camera is triggered, the image processor 100 starts the determined second camera and acquires a second image from the second camera through the second input interface 120 of the image processor 100.

At operation 340, the first image data and the second image data are processed through the first processing channel 1310, and the second processing channel 1320 is released.

The image processor 100 distributes the first image data and the second image data split from the first image through the first input interface 110 to the first processing channel 1310 for processing, so that the second processing channel 1320 can be released, as illustrated in FIG. 7. In this case, the image processor 100 releases the second processing channel 1320.

The image processor 100 can sequentially process the first image data and the second image data by means of the first processing channel 1310, or can convert the first image data and the second image data into image data in an image format that can be processed by means of the first processing channel 1310 before processing and then process the converted image data.

At operation 350, the image data of the second image is processed by means of the second processing channel 1320, and the processed image data of the second image is displayed.

It can be understood that since the second processing channel 1320 is released at this time, the image processor can assign the image data of the acquired second image to the second processing channel 1320 for specified processing through the second input interface 120, as illustrated in FIG. 8.

After the image data of the second image is processed by means of the second processing channel 1320, the image processor 100 no longer displays the processed image data of the first image, but switches to display the processed image data of the second image.

It can be understood that in the multi-camera switching scene provided above, the present disclosure can ensure that images can be displayed continuously during the switching process, and seamless switching of cameras can be realized.

An embodiment of the present disclosure provides an image processor, which includes: a storage unit stored with a computer program; and a processing unit, configured to execute the computer program to: acquire a first image, where the first image includes first image data and second image data; process the first image data by means of a first processing channel of the image processor and process the second image data by means of a second processing channel of the image processor; acquire a second image; process the first image data and the second image data by means of the first processing channel, and release the second processing channel; and process image data of the second image by means of the second processing channel.

In an illustrated embodiment, during processing the first image data and the second image data by means of the first processing channel, the processing unit is configured to: in response to detecting a frame start signal corresponding to the first image, process the first image data and the second image data by means of the first processing channel.

In an illustrated embodiment, during processing the first image data and the second image data by means of the first processing channel, the processing unit is configured to: convert the first image data and the second image data into third image data with an image format capable of being processed by the first processing channel; and process the third image data by means of the first processing channel.

In an illustrated embodiment, the second image includes fourth image data and fifth image data, and the processing unit is further configured to: release the first processing channel; and process the fourth image data by means of the first processing channel, and process the fifth image data by means of the second processing channel.

In an illustrated embodiment, during releasing the first processing channel, the processing unit is configured to: in response to detecting a frame start signal corresponding to the second image, release the first processing channel.

In an illustrated embodiment, before processing image data of the second image by means of the second processing channel, the processing unit is further configured to: display processed image data of the first image.

In an illustrated embodiment, after processing image data of the second image by means of the second processing channel, the processing unit is further configured to: switch to display processed image data of the second image.

In an illustrated embodiment, the second image includes fourth image data and fifth image data, and during processing image data of the second image by means of the second processing channel, the processing unit is configured to: process the fourth image data and the fifth image data by means of the second processing channel.

In an illustrated embodiment, during processing the fourth image data and the fifth image data by means of the second processing channel, the processing unit is configured to: convert the fourth image data and the fifth image data into sixth image data with an image format capable of being processed by the second processing channel; and process the sixth image data by means of the second processing channel.

It should be noted that the image processor provided by the embodiments of the present disclosure has the same concept as that of the image processing method in the above embodiments of the present disclosure, and the specific implementation process of the image processor can refer to the above related embodiments, which will not be repeated herein.

An embodiment of the present disclosure provides an electronic device, which includes: a first camera, configured to acquire a first image, where the first image includes first image data and second image data; a second camera, configured to acquire a second image; the image processor according any one of the embodiments of the present disclosure, and a display coupled to the image processor, where the display is configured to display an image transmitted by the image processor.

The embodiments of the present disclosure does not specifically limit the types of the first camera and the second camera equipped in the electronic device, and the types of the first camera and the second camera may be the same or different. When a focal length is used as a classification standard of the types of the cameras, a camera can be divided into a wide-angle camera, an ultra-wide-angle camera, and a telephoto camera. The first camera may be a wide-angle camera and the second camera may be an ultra-wide-angle camera.

In addition, the embodiments of the present disclosure does not impose specific restrictions on physical display forms of the electronic device, which include but are not limited to a smart phone, a tablet computer, a palmtop computer, a notebook computer, a desktop computer, or a television.

In addition, there is no specific restriction on the type of the display in the embodiments of the present disclosure, and it may be a liquid crystal display, an organic light emitting diode display, or the like.

The image processing method, the image processor and the electronic device provided by the embodiments of the present disclosure are described in detail above. Specific embodiments herein are used to explain the principle and implementation of the present disclosure, and the descriptions of the specific embodiments are merely used to help understand the present disclosure. Further, for those skilled in the art, according to the idea of the present disclosure, some changes can be made to the specific embodiments and an application scope. In addition to processing of the image acquired by the color filter array illustrated in FIG. 3, the present disclosure is also suitable for other similar color filter arrays that need to split the image into two parts of image data and process them separately. In summary, contents of this specification should not be construed as limiting the present disclosure.

## Claims

1. An image processing method, applied to an image processor and comprising:
acquiring a first image, wherein the first image comprises first image data and second image data;
processing the first image data by means of a first processing channel of the image processor, and processing the second image data by means of a second processing channel of the image processor;
acquiring a second image;
processing the first image data and the second image data by means of the first processing channel, and releasing the second processing channel; and
processing image data of the second image by means of the second processing channel.

2. The image processing method according to claim 1, wherein the processing the first image data and the second image data by means of the first processing channel comprises:
in response to detecting a frame start signal corresponding to the first image, processing the first image data and the second image data by means of the first processing channel.

3. The image processing method according to claim 1, wherein the processing the first image data and the second image data by means of the first processing channel comprises:
converting the first image data and the second image data into third image data with an image format capable of being processed by the first processing channel; and
processing the third image data by means of the first processing channel.

4. The image processing method according to any one of claims 1-3, wherein the second image comprises fourth image data and fifth image data, and the image processing method further comprises:
releasing the first processing channel; and
processing the fourth image data by means of the first processing channel, and processing the fifth image data by means of the second processing channel.

5. The image processing method according to claim 4, wherein the releasing the first processing channel comprises:
in response to detecting a frame start signal corresponding to the second image, releasing the first processing channel.

6. The image processing method according to any one of claims 1-3, wherein before the processing image data of the second image by means of the second processing channel, the image processing method further comprises:
displaying processed image data of the first image.

7. The image processing method according to claim 6, wherein after the processing image data of the second image by means of the second processing channel, the image processing method further comprises:
switching to display processed image data of the second image.

8. The image processing method according to any one of claims 1-3, wherein the second image comprises fourth image data and fifth image data, and the processing image data of the second image by means of the second processing channel comprises:
processing the fourth image data and the fifth image data by means of the second processing channel.

9. The image processing method according to claim 8, wherein the processing the fourth image data and the fifth image data by means of the second processing channel comprises:
converting the fourth image data and the fifth image data into sixth image data with an image format capable of being processed by the second processing channel; and
processing the sixth image data by means of the second processing channel.

10. An image processor, comprising:
a first input interface, configured to acquire a first image, wherein the first image comprises first image data and second image data; and
a second input interface, configured to acquire image data of a second image;
wherein the image processor is configured to process the first image data by means of a first processing channel and processing the second image data by means of a second processing channel; and in response to the second input interface acquiring the image data of the second image, process the first image data and the second image data by means of the first processing channel, release the second channel, and process the image data of the second image by means of the second processing channel.

11. An image processor, comprising:
a storage unit stored with a computer program; and
a processing unit, configured to execute the computer program to:
acquire a first image, wherein the first image comprises first image data and second image data;
process the first image data by means of a first processing channel of the image processor, and process the second image data by means of a second processing channel of the image processor;
acquire a second image;
process the first image data and the second image data by means of the first processing channel, and release the second processing channel; and
process image data of the second image by means of the second processing channel.

12. The image processor according to claim 11, wherein during processing the first image data and the second image data by means of the first processing channel, the processing unit is configured to:
in response to detecting a frame start signal corresponding to the first image, process the first image data and the second image data by means of the first processing channel.

13. The image processor according to claim 11, wherein during processing the first image data and the second image data by means of the first processing channel, the processing unit is configured to:
convert the first image data and the second image data into third image data with an image format capable of being processed by the first processing channel; and
process the third image data by means of the first processing channel.

14. The image processor according to any one of claims 11-13, wherein the second image comprises fourth image data and fifth image data, and the processing unit is further configured to:
release the first processing channel; and
process the fourth image data by means of the first processing channel, and process the fifth image data by means of the second processing channel.

15. The image processor according to claim 14, wherein during releasing the first processing channel, the processing unit is configured to:
in response to detecting a frame start signal corresponding to the second image, release the first processing channel.

16. The image processor according to any one of claims 11-13, wherein before processing image data of the second image by means of the second processing channel, the processing unit is further configured to:
display processed image data of the first image.

17. The image processor according to claim 16, wherein after processing image data of the second image by means of the second processing channel, the processing unit is further configured to:
switch to display processed image data of the second image.

18. The image processor according to any one of claims 11-13, wherein the second image comprises fourth image data and fifth image data, and during processing image data of the second image by means of the second processing channel, the processing unit is configured to:
process the fourth image data and the fifth image data by means of the second processing channel.

19. The image processor according to claim 18, wherein during processing the fourth image data and the fifth image data by means of the second processing channel, the processing unit is configured to:
convert the fourth image data and the fifth image data into sixth image data with an image format capable of being processed by the second processing channel; and
process the sixth image data by means of the second processing channel.

20. An electronic device, comprising:
a first camera, configured to acquire a first image, wherein the first image comprises first image data and second image data;
a second camera, configured to acquire a second image;
the image processor according to claim 10 or 11, and
a display coupled to the image processor, wherein the display is configured to display an image transmitted by the image processor.
